# EUROPEAN PATENT APPLICATION

(11) **EP 3 609 048 A1**
(43) Date of publication of application: **12.02.2020**
(21) Application number: 19190320.2
(22) Date of filing: 06.08.2019
(51) Int. Cl.: H02J 7/00

(54) **BATTERY PACK INCLUDING A BATTERY PACK BLACK BOX**

(30) Priority: 06.08.2018 US 201862714933 P
(71) Applicant: TTI (Macao Commercial Offshore) Limited, Macao (MO)
(72) Inventor: Huggins, Mark, Anderson, SC 29621 (US); Rowe, Tyler J, Anderson, SC 29621 (US); Bryan, Frederick, Greenville, SC 29607 (US)
(74) Representative: Williams, Annabel

(57) **Abstract**

A battery pack that includes a housing connectable to and supportable by a tool. The battery pack also includes a controller having a processor and a memory. The controller is connected to one or more sensors which provide data to the controller related to operational characteristics of the battery pack. The controller stores the operational characteristics of the battery pack in the memory. The battery pack also includes a battery pack black box. The controller communicates with the black box using a wired communication bus and transmits the stored operational characteristics of the battery pack to the black box. The battery pack black box is capable of transmitting the stored operational characteristics wirelessly to a device external to the battery pack.

## Description

### FIELD

Embodiments described herein relate to a battery pack for powering devices such as power tools and outdoor power products.

### BACKGROUND

Battery packs used to power devices such as power tools and outdoor power products are often subject to adverse conditions that can compromise the operational capabilities of the battery packs. For example, at a work site, a battery pack may be subject to multiple falls and impacts from being dropped. The battery packs may also be used to operate a tool to the point that various fault conditions of the battery pack (e.g., over temperature, undervoltage, etc.) can be reached. As a result of the potential for battery packs to be damaged in the normal course of use, as well as to be damaged as the result of misuse, it would be advantageous to keep a record of the characteristics (e.g., operational characteristics) of the battery pack. Such a record could, for example, help the manufacturer of the battery pack determine whether the battery pack's warranty has been voided. A log or record of the operational characteristics of a given battery pack can be stored in the memory of the battery pack (e.g., in memory associated with a controller of the battery pack). However, because of the susceptibility of battery packs to damage, the data stored in the memory of the battery pack may be compromised or corrupted.

### SUMMARY OF THE INVENTION

In addition to storing battery pack operating characteristics in a battery pack controller's memory, the battery pack can also include a battery pack black box. The battery pack black box can be largely insulated from the other portions of the battery pack and may only connect to a battery pack controller via a wired communication bus. The purpose of the black box is to provide a durable and effective means for logging important performance and operational data associated with the battery pack. To ensure that the battery pack black box reliably logs and reproduces battery pack performance and operational data, the black box is "hardened" or reinforced (e.g., structurally reinforced) with respect to the other components of the battery pack (e.g., the battery pack's housing) to protect the black box's internal circuitry from being damaged.

Embodiments described herein provide a battery pack for a power tool or an outdoor power product. The battery pack includes a housing that is connectable to and supportable by the power tool or the outdoor power product. The battery pack also includes a controller having a processing unit and a memory. The controller is connected to one or more sensors that provide data to the controller related to operational characteristics of the battery pack. The controller stores the operational characteristics of the battery pack in the memory. The battery pack also includes a battery pack black box. The battery pack black box is connected to the controller via a communication bus. The controller communicates with the black box over the communication bus and transmits the stored operational characteristics of the battery pack to the black box. The black box includes a second communication module and a second memory. The black box stores the received operational characteristics in the second memory. The black box is operable to communicate the operational characteristics externally to the battery pack using the second communication module.

The pack black box may be connected to the controller via a communication bus. The battery pack black box may receive power over the communication bus. The battery pack black box may further include a power source independent of the plurality of battery cells. The communication module may be configured to communicate externally to the battery pack using the short-range wireless communication protocol. The short-range wireless communication protocol may be a near-field communication ("NFC") protocol.

Embodiments described herein provide a battery pack for powering a device. The battery pack includes a housing, a plurality of battery cells positioned within the housing, a sensor, a battery pack black box, and a controller. The housing is connectable to and supportable by the device. The plurality of battery cells are positioned within the housing. The sensor is configured to generate an output signal related to a characteristic of the battery pack. The battery pack black box includes a communication module and a first memory. The controller includes a processing unit and a second memory. The controller is connected to the sensor and the battery pack black box. The controller is configured to receive the output signal from the sensor related to the characteristic of the battery pack, store the characteristic of the battery pack in the second memory, and transmit the stored characteristic of the battery pack to the battery pack black box. The battery pack black box is configured to store the received characteristic of the battery pack in the first memory. The battery pack black box is configured to communicate the characteristic of the battery pack externally to the battery pack using the communication module.

The pack black box may be connected to the controller via a communication bus. The battery pack black box may receive power over the communication bus. The battery pack black box may further include a power source independent of the one or more battery cells. The communication module may be configured to communicate externally to the battery pack using the short-range wireless communication protocol. The short-range wireless communication protocol may be a near-field communication ("NFC") protocol. The sensor may be selected from the group consisting of: a current sensor, a voltage sensor, a temperature sensor, an accelerometer, a light sensor, a Hall effect sensor, a switch, and a moisture sensor.

Embodiments described herein provide a battery pack for powering a device. The battery pack includes a housing, one or more battery cells positioned within the housing, a sensor, a battery pack black box, and a controller. The housing is connectable to and supportable by the device. The sensor is configured to generate an output signal related to a characteristic of the battery pack. The battery pack black box is positioned within the housing. The battery pack black box includes a communication module and a first memory. The controller includes a processing unit and a second memory. The controller is connected to the sensor and the battery pack black box. The controller is configured to receive the output signal from the sensor related to the characteristic of the battery pack, and transmit the operational characteristic of the battery pack to the battery pack black box. The battery pack black box is configured to store the characteristic of the battery pack in the first memory. The battery pack black box is operable to communicate the characteristic of the battery pack externally to the battery pack using the communication module. The pack black box may be connected to the controller via a communication bus. The battery pack black box may receive power over the communication bus. The battery pack black box may further include a power source independent of the one or more battery cells. The communication module may be configured to communicate externally to the battery pack using the short-range wireless communication protocol. The short-range wireless communication protocol may be a near-field communication ("NFC") protocol. The sensor may be selected from the group consisting of: an accelerometer, a light sensor, and a moisture sensor.

Embodiments described herein provide a battery pack for powering a device. The battery pack includes a housing, one or more battery cells positioned within the housing, a sensor, and a battery pack black box. The housing is connectable to and supportable by the device. The sensor is configured to generate an output signal related to a characteristic of the battery pack. The battery pack black box includes a communication module and a memory. The battery pack black box is configured to store the characteristic of the battery pack in the memory. The battery pack black box is operable to communicate the characteristic externally to the battery pack using the communication module.

The battery pack black box may further include a power source independent of the one or more battery cells. The communication module may be configured to communicate external to the battery pack using a short-range wireless communication protocol. The short-range wireless communication protocol may be a near-field communication ("NFC") protocol. The sensor may be selected from the group consisting of: an accelerometer, a light sensor, and a moisture sensor. The battery pack black box may be reinforced with respect to the housing.

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers" and "computing devices" described in the specification can include one or more processing units, one or more computer-readable medium modules, one or more input/output interfaces, and various connections (e.g., a system bus) connecting the components.

Any feature(s) described herein in relation to one aspect, embodiment or example may be combined with any other feature(s) described herein in relation to any other aspect, embodiment or example as appropriate and applicable. Other aspects of the embodiments will become apparent by consideration of the detailed description and accompanying drawings.

### BRIEF DESCRIPTION OF THE DRAWINGS

FIG. 1 is a perspective view of a battery pack, according to embodiments described herein.
FIG. 2 is a top view of the battery pack of FIG. 1.
FIG. 3 is a section view the battery pack of FIG. 1 showing battery cells, according to embodiments described herein.
FIG. 4 illustrates a battery pack including a battery pack black box, according to embodiments described herein.
FIG. 5 illustrates a battery pack black box, according to embodiments described herein.
FIG. 6 illustrates a tool including the black box of FIG. 5, according to embodiments described herein.
FIG. 7 illustrates a battery charger including the black box of FIG. 5, according to embodiments described herein.

### DETAILED DESCRIPTION

Embodiments described herein related to a battery pack that includes a battery pack black box. The black box is largely insulated from the other portions of a battery pack. The purpose of the black box is to provide a durable and effective means for logging important performance and operational data associated with a battery pack and the power tools or outdoor power products to which the battery pack is attached. For example, the black box can log voltage and current charging/discharging characteristics associated with the battery pack. The black box can also log data related to fault conditions of the battery pack, including whether the battery pack housing has been opened, battery pack impact events (e.g., being dropped), liquid ingress, etc. The data logged in the black box can be used by a manufacturer of the battery pack to determine whether a particular battery pack was defective or was abused by a user. For example, depending upon how the battery pack was used, a manufacturer's product warranty may be voided. As a result, the black box can be used to evaluate battery packs when they are returned or exchanged as potentially defective battery packs. To ensure that the battery pack black box is able to log and reliably reproduce battery pack performance and fault data, the black box is "hardened" or reinforced (e.g., structurally reinforced) with respect to the other components of the battery pack (e.g., the battery pack's housing). For example, the black box can be made from a durable metal (e.g., aluminum, steel, titanium, etc.) or reinforced plastic that protects the black box's internal circuitry from being damaged.

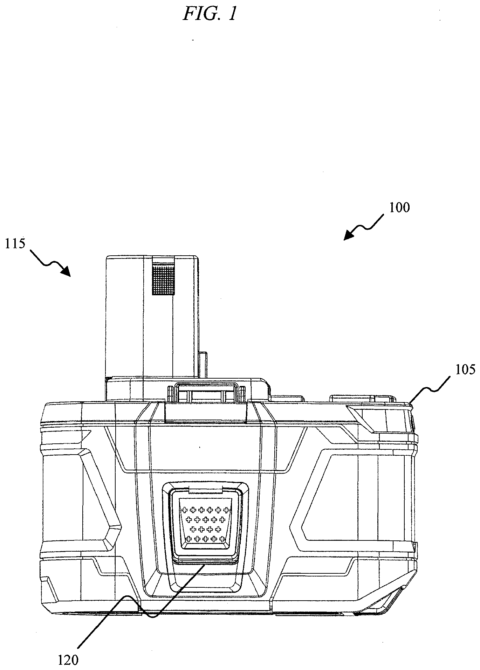

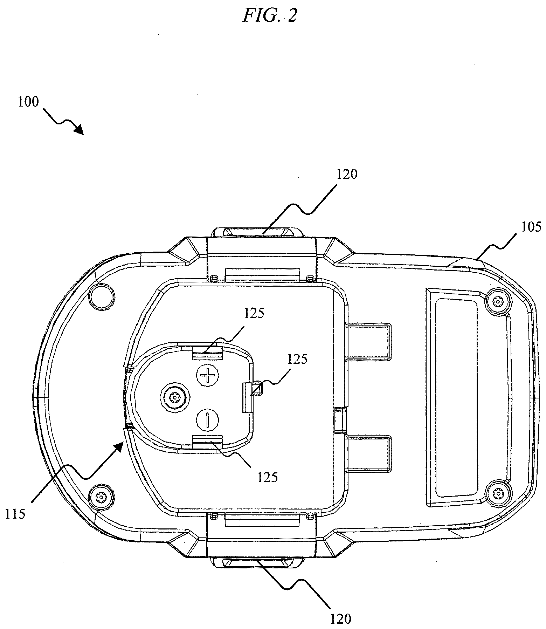

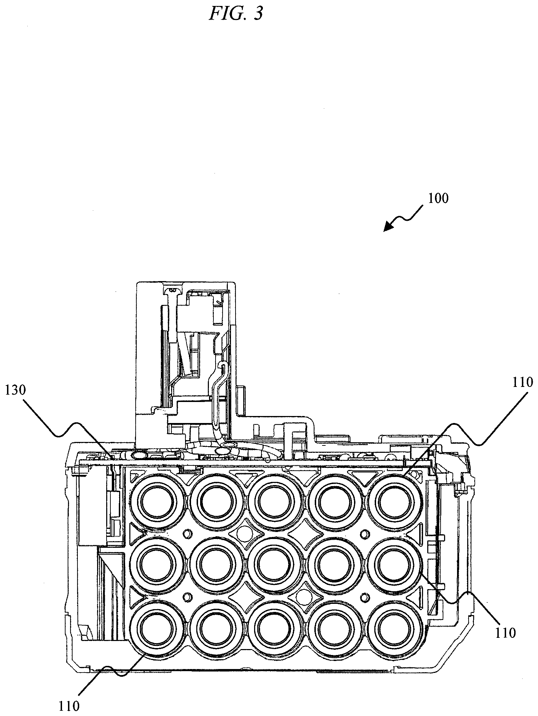

FIGS. 1-3 illustrate a battery pack 100 that includes a battery pack black box. The battery pack 100 is connectable to and supportable by hand-held power tools or devices such as drills, saws, pipe cutters, sanders, nailers, staplers, vacuum cleaners, inflators, etc. The battery pack 100 is also connectable to and supportable by outdoor power products or devices such as string trimmers, hedge trimmers, blowers, chain saws, pressure washers, snow blowers, mowers, etc. The devices to which the battery pack 100 is connectable to and supportable by can be collectively referred to herein as devices or tools. As shown in FIGS. 1-3, the battery pack 100 includes a housing 105 and at least one rechargeable battery cell 110 (shown in FIG. 3) supported within and by the housing 105. The battery pack 100 also includes a support portion 115 for supporting the battery pack 100 on a tool, and a coupling mechanism 120 for selectively coupling the battery pack 100 to, or releasing the battery pack 100 from, a tool. The support portion 115 is connectable to a complementary support portion on a tool.

The battery pack 100 includes a plurality of terminals 125 within the support portion 115 and operable to electrically connect the battery cells 110 to a PCB 130 within the battery pack 100. The plurality of terminals 125 includes, for example, a positive battery terminal, a ground terminal, and a sense or data terminal. The battery pack 100 is removably and interchangeably connected to a tool to provide operational power to the tool. The terminals 125 are configured to mate with corresponding power terminals extending from a tool within a complementary receiving portion.

The illustrated battery pack 100 includes fifteen battery cells 110. In other embodiments, the battery pack 100 can include more or fewer battery cells 110. The battery cells can be arranged in series, parallel, or a series-parallel combination. For example, the battery pack can include a total of fifteen battery cells configured in a series-parallel arrangement of five sets of three series-connected cells. The series-parallel combination of battery cells allows for an increased voltage and an increased capacity of the battery pack. In some embodiments, the battery pack 100 includes five series-connected battery cells. In other embodiments, the battery pack 100 includes a different number of battery cells (e.g., between three and thirty battery cells) connected in series, parallel, or a series-parallel combination in order to produce a battery pack having a desired combination of nominal battery pack voltage and battery capacity.

The battery cells 110 are lithium-based battery cells having a chemistry of, for example, lithium-cobalt ("Li-Co"), lithium-manganese ("Li-Mn"), or Li-Mn spinel. In some embodiments, the battery cells 110 have other suitable lithium or lithium-based chemistries, such as a lithium-based chemistry that includes manganese, etc. The battery cells within the battery pack 100 provide operational power (e.g., voltage and current) to the tools. In one embodiment, each battery cell 110 has a nominal voltage of approximately 3.6V, such that the battery pack has a nominal voltage of approximately 18V. In other embodiments, the battery cells have different nominal voltages, such as, for example, between 3.6V and 4.2V, and the battery pack has a different nominal voltage, such as, for example, 10.8V, 12V, 14.4V, 24V, 28V, 36V, 60V, 80V, between 10.8V and 80V, etc. The battery cells 110 also each have a capacity of, for example, approximately between 1.0 ampere-hours ("Ah") and 6.0Ah. In exemplary embodiments, the battery cells have capacities of approximately, 1.5Ah, 2.4Ah, 3.0Ah, 4.0Ah, 6.0Ah, between 1.5Ah and 6.0Ah, etc.

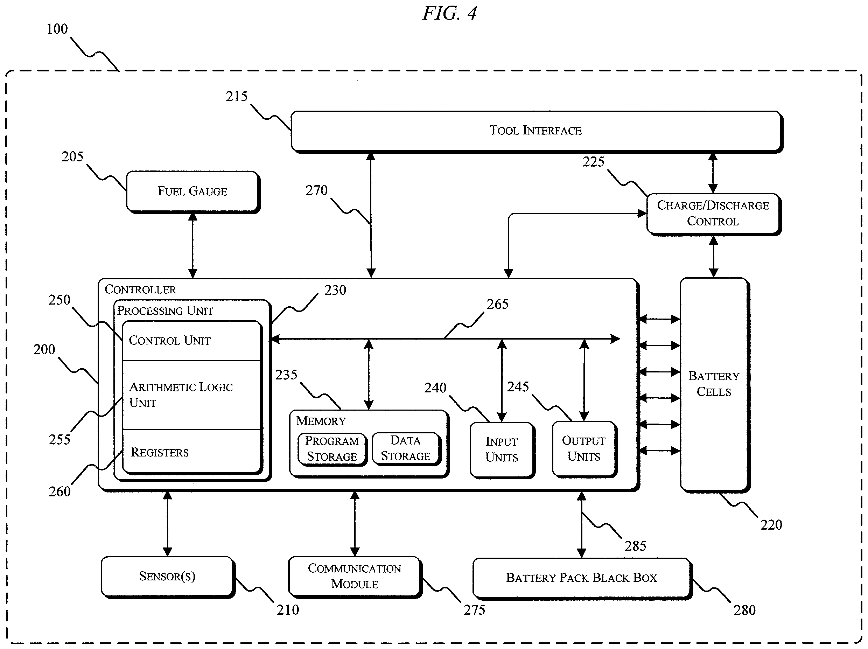

The power output by the battery pack 100 to a tool is controlled, monitored, and regulated using control electronics within the battery pack 100, a tool, or a combination thereof. FIG. 4 illustrates a controller 200 associated with the battery pack 100. The controller 200 is electrically and/or communicatively connected to a variety of modules or components of the battery pack 100. For example, the illustrated controller 200 is connected to a fuel gauge 205, one or more sensors 210, a tool interface 215, a plurality of battery cells 220, a charge/discharge control module 225 (optional within battery pack), a communication module 275, and a battery pack black box 280. The controller 200 includes combinations of hardware and software that are operable to, among other things, control the operation of the battery pack 100, activate the fuel gauge 205, monitor the operation of the battery pack 100, etc. The fuel gauge 205 includes, for example, one or more indicators, such as light-emitting diodes ("LEDs"). The fuel gauge 205 can be configured to display conditions of, or information associated with, the state-of-charge of the battery cells 220. The controller 200 also includes a variety of preset or calculated fault condition values related to temperatures, currents, voltages, etc., associated with the operation of a tool.

In some embodiments, the controller 200 includes a plurality of electrical and electronic components that provide power, operational control, and protection to the components and modules within the controller 200 and/or battery pack 100. For example, the controller 200 includes, among other things, a processing unit 230 (e.g., a microprocessor, a microcontroller, or another suitable programmable device), a memory 235, input units 240, and output units 245. The processing unit 230 includes, among other things, a control unit 250, an arithmetic logic unit ("ALU") 255, and a plurality of registers 260 (shown as a group of registers in FIG. 4), and is implemented using a known computer architecture, such as a modified Harvard architecture, a von Neumann architecture, etc. The processing unit 230, the memory 235, the input units 240, and the output units 245, as well as the various modules connected to the controller 200 are connected by one or more control and/or data buses (e.g., common bus 265). The control and/or data buses are shown generally in FIG. 4 for illustrative purposes. The use of one or more control and/or data buses for the interconnection between and communication among the various modules and components would be known to a person skilled in the art in view of the invention described herein. In some embodiments, the controller 200 is implemented partially or entirely on a semiconductor (e.g., a field-programmable gate array ["FPGA"] semiconductor) chip, such as a chip developed through a register transfer level ("RTL") design process.

The memory 235 is a non-transitory computer readable medium that includes, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, or electronic memory devices. The processing unit 230 is connected to the memory 235 and executes software instructions that are capable of being stored in a RAM of the memory 235 (e.g., during execution), a ROM of the memory 235 (e.g., on a generally permanent basis), or another non-transitory computer readable medium such as another memory or a disc. Software included in the implementation of the battery pack 100 can be stored in the memory 235 of the controller 200. The software includes, for example, firmware, one or more applications, program data, filters, rules, one or more program modules, and other executable instructions. The controller 200 is configured to retrieve from memory and execute, among other things, instructions related to the control of the battery pack described herein. The controller 200 can also store various battery pack parameters and characteristics (including battery pack nominal voltage, chemistry, battery cell characteristics, maximum allowed discharge current, maximum allowed temperature, etc.). In other constructions, the controller 200 includes additional, fewer, or different components.

The tool interface 215 includes a combination of mechanical components (e.g., the support portion 115) and electrical components (e.g., the plurality of terminals 125) configured to, and operable for, interfacing (e.g., mechanically, electrically, and communicatively connecting) the battery pack 100 with a tool. For example, power provided from the battery pack 100 to a tool is provided through the charge/discharge control module 225 to the tool interface 215. The charge/discharge control module 225 includes, for example, one or more switches (e.g., FETs) for controlling the charging current to and discharge current from the battery cells 220. The tool interface 215 also includes, for example, a communication line 270 for providing a communication line or link between the controller 200 and a tool.

The communication module 275 can be implemented using a variety of communications schemes. For example, the communication module 275 can be implemented using a near-field communication ("NFC"), Bluetooth, RFID, or another short-range, noncontact (i.e., wireless) communication protocol. The protocol selected for enabling communication between the communication module 275 and devices external to the battery pack 100 can be selected based on power requirements and power availability. In some embodiments, the communication protocol that requires the least amount of power for communication between the communication module 275 and devices external to the battery pack 100 can be selected. The communication module 275 is operable to, for example, transmit operational characteristics of the battery pack 100 to an external device. The operational characteristics of the battery pack 100 can be used by, for example, the battery pack manufacturer to determine whether the battery pack's warranty has been voided. In some embodiments, the communication module 275 communicates with devices external to the battery pack 100 via a direct communication line (e.g., the battery pack 100 includes recessed contact terminals for directly connecting to the communication module 275).

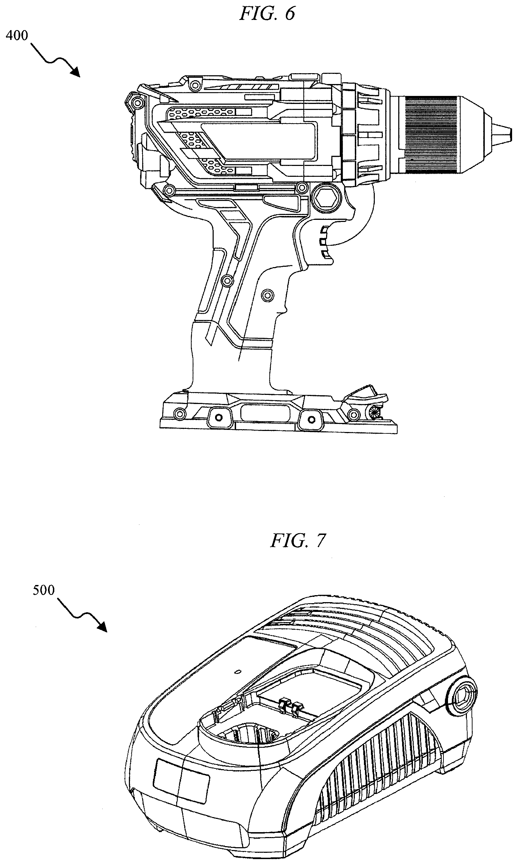

The sensors 210 include, for example, one or more current sensors, one or more voltage sensors, one or more temperature sensors, one or more accelerometers, one or more light sensors, one or more Hall effect sensors, one or more switches (e.g., reed switches), one or more moisture sensors (e.g., liquid ingress sensors, liquid contact indicators, etc.), etc. For example, the controller 200 uses the sensors 210 to monitor an individual state of charge of each of the battery cells 220, monitor a current being discharged from the battery cells 220, monitor the temperature of one or more of the battery cells 220, monitor the acceleration of the battery pack 100, monitor for the opening of the housing 105, etc. If the voltage of one of the battery cells 220 is equal to or above an upper voltage limit (e.g., a maximum charging voltage), the charge/discharge control module 225 prevents the battery cells from being further charged or requests that a battery charger (see FIG. 7) provide a constant voltage charging scheme. Alternatively, if one of the battery cells 220 falls below a low-voltage limit, the charge/discharge control module prevents the battery cells 220 from being further discharged. Similarly, if an upper or lower operational temperature limit for the battery cells 220 is reached, the controller 200 can prevent the battery pack 100 from being charged or discharged until the temperature of the battery cells 220 or the battery pack 100 is within an acceptable temperature range.

The sensors 210 are also operable to be used to monitor for an impact event, such as the battery pack 100 falling and impacting the ground. One or more accelerometers can be used to detect a moment of impact, as well as monitor the battery pack's acceleration with respect to time. For example, upon detecting that the battery pack 100 has accelerated and suffered an impact, the controller 200 can assess the seriousness of the impact based on measured G-force magnitude from the accelerometer and free-fall time. An impact threshold value related to the mechanical stresses that the battery pack 100 is capable of withstanding and remaining operational can be determined based on a combination of G-force magnitude and free fall times (e.g., related to the height from which the battery pack 100 falls). The impact threshold value can additionally or alternatively be related to forces that are indicative of customer abuse of the battery pack 100 (e.g., repeated severe impacts). In the event that a particular impact exceeds the impact threshold value (e.g., a hard fall condition), the controller 200 may prevent the battery pack 100 from being charged and/or discharged.

The sensors 210 are also operable to be used to monitor for the housing 105 of the battery pack 100 being opened. Opening the battery pack housing 105 can, for example, void a manufacturer's warranty and be potentially dangerous for the person opening the housing 105. A sensor can be used to monitor for the opening of the housing 105. For example, a light sensor can be used to detect light within an interior portion of the battery pack 100 that, when the battery pack housing 105 is properly closed, does not detect any light. If the sensor detects light, the controller 200 determines that the battery pack housing 105 has been opened. In some embodiments, a magnet and a reed switch can be used to detect the opening of the battery pack housing 105. For example, the reed switch can be positioned on a bottom portion of the housing 105 and a magnet can be positioned on a top portion of the housing 105. When the top portion of the housing 105 is removed to open the battery pack 100, the reed switch detects the magnet moving away. Similarly, a Hall effect sensor can be used to detect the magnets magnetic field and determine that the top portion of the housing 105 has been removed and the battery pack housing 105 has been opened. In other embodiments, an electrical switch is used to detect the opening of the housing 105. For example, when the top portion of the housing 105 is removed, a switch changes from being closed to being open. The controller 200 detects the change in the state of the switch by monitoring a voltage input terminal of the controller 200. In the event that the controller 200 detects the opening of the housing 105, the controller 200 may prevent the battery pack 100 from being charged or discharged.

The sensors 210 are also operable to be used to detect moisture or liquid ingress into the housing 105 of the battery pack 100. Liquid ingress into the battery pack 100 is also an indicator of potential misuse by a user of the battery pack. Liquid ingress into the battery pack 100 can be detected or identified in a variety of ways. For example, internal portions of the battery pack housing 105 can include liquid contact indicators ("LCIs"). The LCIs change color when they are exposed to water. If the battery pack 100 becomes defective, the manufacturer of the battery pack 100 can observe the LCIs to determine if water entered the battery pack housing 105. Additionally or alternatively, the battery pack 100 can include one or more electronic circuits that are operable to detect the presence of moisture or water at particular locations within the battery pack housing 105. For example, the circuits can be positioned at locations within the housing that are the most susceptible to liquid ingress (e.g., battery pack terminals 125). Periodic voltage signals can be sent to the circuits and a resistance of the circuit can be measured. When a change in resistance of the circuit above a threshold value is detected, the controller 200 determines that a liquid ingress fault has occurred. Circuits for detecting liquid or moisture ingress are generally known to those skilled in the art.

When the controller 200 determines, via any of the sensors 210, that a fault condition or adverse operational condition (e.g., housing 105 opened, impact, liquid ingress, etc.) has occurred, the controller 200 can log the events in the memory 235 (e.g., in non-volatile memory). The controller 200 can also transmit data related to the fault condition, adverse operation condition, or battery pack 100 status, collectively referred to as characteristics of the battery pack, to the black box 280 over a communication bus 285.

The battery pack black box 280 is configured or operable to receive fault condition, adverse operation condition, and/or battery pack 100 status data from the controller 200 (i.e., characteristics of the battery pack 100). The black box 280 then stores the received data in non-volatile memory. In some embodiments, the black box 280 operates as a general storage device for the controller 200. As a result, the black box 280 is operable to, upon request from the controller 200, retrieve from memory and send back over the communication bus 285 data that was previously provided to the black box 280 by the controller 200.

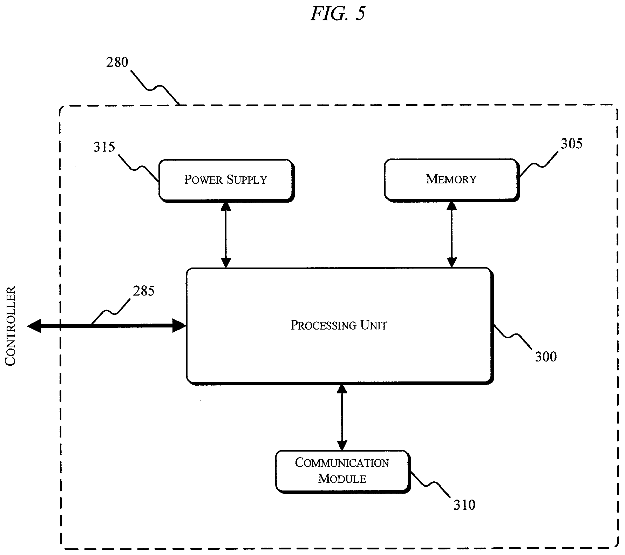

As illustrated in FIG. 5, the black box 280 includes a processing unit 300, a memory 305, a communication module 310, and a power supply 315. The black box 280 is largely insulated from the other parts of the battery pack 100 and the tool to which the battery pack 100 is attached. Because the black box 280 is physically located within the battery pack 100, the black box 280 necessarily contacts internal portions of the battery pack 100 or housing 105. As described above, the black box 280 is also communicatively connected to the controller 200 via the communication bus 285. However, the black box 280 does not otherwise mechanically interact with portions of the battery pack 100 or any tool to which the battery pack 100 is attached. The black box 280 is "hardened" or reinforced in relation to other components of the battery pack (e.g., the battery pack's housing). As a result, the black box 280 is better able to withstand conditions that may result in significant damage to the battery pack 100. For example, the black box 280 can be made from a durable metal (e.g., aluminum, steel, titanium, etc.) or reinforced plastic that protects the black box 280's internal circuitry from being damaged. In some embodiments, the black box 280 is covered in an epoxy coating and can be water and/or fireproof. The black box 280's internal circuitry can also be constructed in a manner that prevents electrical connections between components from being severed or disconnected as the result of an impact above the impact threshold value. For example, protective electronics can be included in the black box 280 and coated with protective epoxy or another material to ensure that electrical connections are not severed.

The processing unit 300 can be implemented using any of a variety of processing devices. In some embodiments, the processing unit 300 is similar to the controller 200 of the battery pack 100. In other embodiments, the processing unit 300 is an FPGA, an ASIC, etc. The main function of the processing unit 300 is to receive data from the controller 200 related to the operation and/or condition of the battery pack 100. For example, the processing unit 300 receives data related to the characteristics of the battery pack 100. Characteristics include the occurrence of any battery pack fault conditions, such as over voltage and undervoltage conditions, time-logged voltage, discharge current, and charging current data, time-logged temperature data, acceleration data, liquid ingress data, etc. The processing unit 300 then writes the received data to the memory 305. The memory 305 is a non-volatile memory, such as an EEPROM, a flash memory, or another non-transitory computer readable medium.

The communication module 310 is configured to communicate with devices external to the battery pack 100 using the short-range communications protocol (e.g., the same protocol selected for the communication module 275). As a result, the black box 280 is capable of communicating data stored in the memory 305 externally to the battery pack 100. By transmitting data stored in the memory 305 externally to the battery pack 100, the operational history of the battery pack 100 can be evaluated without having to remove the black box 280 from the battery pack 100. A manufacturer could, for example, use the retrieved data to determine whether a warranty has been voided or whether the battery pack 100 has been misused (e.g., intentionally damaged). The black box 280 is also physically removable from the battery pack 100. In some embodiments, the black box 280 is operable as a conduit for communicating with the controller 200. For example, in addition to transmitting data externally to the battery pack 100 using the communication module 310, the communication module 310 can receive data from an external device and relay that data to the controller 200 over the communication bus 285. Such a feature is particularly useful in situations where the battery pack 100 or another device that includes the black box 280 does not include a separate communication module (e.g., communication module 275).

The power supply 315 is available to provide power to the black box 280 (e.g., independent of the battery cells 220). Because the black box 280 is mostly insulated from the other parts of the battery pack 100, the black box 280 is not necessarily powered by the battery cells 220. In some embodiments, power is provided to the black box 280 over the communication bus 285 between the controller 200 and the black box 280. The black box 280 requires some power to receive and store data from the controller 200 and transmit data through the communication module 310. In some embodiments, the power supply 315 includes one or more button cell batteries. In other embodiments, the black box 280 can operate based on power harvested from radio frequency signals received from a communication module external to the battery pack 100 (e.g., similarly to how RFID tags are powered).

Although the black box 280 is described above primarily with respect to a battery pack for powering a tool, the black box 280 could also be implemented in other devices, such as a tool 400 illustrated in FIG. 6 or a battery charger 500 illustrated in FIG. 7. In embodiments of the invention where the black box 280 is incorporated into the tool 400 or the battery charger 500, the black box 280 is implemented in a substantially similar manner. For example, the black box 280 is largely insulated from the other components of the tool 400 or battery charger 500, the black box communicates with a controller of the tool 400 or battery charger 500 over a communication bus, and the black box 280 includes a communication module for communicating stored data from memory 305 to, or receiving data from, an external device.

Thus, embodiments described herein provide, among other things, a battery pack for power tools or outdoor power products that includes a battery pack black box. Various features and advantages are set forth in the following claims.

## Claims

1. A battery pack for powering a device, the battery pack comprising:
a housing connectable to and supportable by the device;
a plurality of battery cells positioned within the housing;
a sensor configured to generate an output signal related to a characteristic of the battery pack;
a battery pack black box including a communication module and a first memory; and
a controller including a processing unit and a second memory, the controller connected to the sensor and the battery pack black box, the controller configured to:
receive the output signal from the sensor related to the characteristic of the battery pack,
store the characteristic of the battery pack in the second memory, and
transmit the stored characteristic of the battery pack to the battery pack black box,
wherein the battery pack black box is configured to store the received characteristic of the battery pack in the first memory, and
wherein the battery pack black box is configured to communicate the characteristic of the battery pack externally to the battery pack using the communication module.

2. The battery pack of claim 1, wherein the pack black box is connected to the controller via a communication bus;
and, optionally
wherein the battery pack black box receives power over the communication bus.

3. The battery pack of claim 1 or 2, wherein the battery pack black box further includes a power source independent of the plurality of battery cells.

4. The battery pack of any one of claims 1-3, wherein the communication module is configured to communicate externally to the battery pack using the short-range wireless communication protocol;
and, optionally
wherein the short-range wireless communication protocol is a near-field communication ("NFC") protocol.

5. The battery pack of any one of claims 1-4, wherein the sensor is selected from the group consisting of: a current sensor, a voltage sensor, a temperature sensor, an accelerometer, a light sensor, a Hall effect sensor, a switch, and a moisture sensor.

6. A battery pack for powering a device, the battery pack comprising:
a housing connectable to and supportable by the device;
one or more battery cells positioned within the housing;
a sensor configured to generate an output signal related to a characteristic of the battery pack;
a battery pack black box positioned within the housing, the battery pack black box including a communication module and a first memory; and
a controller including a processing unit and a second memory, the controller connected to the sensor and the battery pack black box, the controller configured to:
receive the output signal from the sensor related to the characteristic of the battery pack, and
transmit the operational characteristic of the battery pack to the battery pack black box,
wherein the battery pack black box is configured to store the characteristic of the battery pack in the first memory, and
wherein the battery pack black box is operable to communicate the characteristic of the battery pack externally to the battery pack using the communication module.

7. The battery pack of claim 6, wherein the pack black box is connected to the controller via a communication bus;
and, optionally
wherein the battery pack black box receives power over the communication bus.

8. The battery pack of claim 6 or 7, wherein the battery pack black box further includes a power source independent of the one or more battery cells.

9. The battery pack of any one of claims 6-8, wherein the communication module is configured to communicate externally to the battery pack using the short-range wireless communication protocol;
and, optionally
wherein the short-range wireless communication protocol is a near-field communication ("NFC") protocol.

10. The battery pack of any one of claims 6-9, wherein the sensor is selected from the group consisting of: an accelerometer, a light sensor, and a moisture sensor.

11. A battery pack for powering a device, the battery pack comprising:
a housing connectable to and supportable by the device;
one or more battery cells positioned within the housing;
a sensor configured to generate an output signal related to a characteristic of the battery pack; and
a battery pack black box including a communication module and a memory, the battery pack black box configured to store the characteristic of the battery pack in the memory, the battery pack black box operable to communicate the characteristic externally to the battery pack using the communication module.

12. The battery pack of claim 11, wherein the battery pack black box further includes a power source independent of the one or more battery cells.

13. The battery pack of claim 11 or 12, wherein the communication module is configured to communicate external to the battery pack using a short-range wireless communication protocol;
and, optionally
wherein the short-range wireless communication protocol is a near-field communication ("NFC") protocol.

14. The battery pack of any one of claims 11-13, wherein the sensor is selected from the group consisting of: an accelerometer, a light sensor, and a moisture sensor.

15. The battery pack of any one of claims 11-14, wherein the battery pack black box is reinforced with respect to the housing.
